(19) Europäisches Patentamt
European Patent Office
Office européen des brevets

(11) **EP 4 234 143 A1**

(12) **EUROPEAN PATENT APPLICATION**
published in accordance with Art. 153(4) EPC

(43) Date of publication:
**30.08.2023 Bulletin 2023/35**

(21) Application number: **21882746.7**

(22) Date of filing: **18.10.2021**

(51) International Patent Classification (IPC):
**B23H 7/02** $^{(2006.01)}$

(52) Cooperative Patent Classification (CPC):
**B23H 7/02**

(86) International application number:
**PCT/JP2021/038338**

(87) International publication number:
**WO 2022/085605 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020 JP 2020177914**

(71) Applicant: **FANUC CORPORATION**
**Oshino-mura**
**Minamitsuru-gun**
**Yamanashi 401-0597 (JP)**

(72) Inventors:
• **CHU, Fuchen**
**Minamitsuru-gun, Yamanashi 401-0597 (JP)**
• **KAWAHARA, Akiyoshi**
**Minamitsuru-gun, Yamanashi 401-0597 (JP)**

(74) Representative: **Schmidt, Steffen J.**
**Wuesthoff & Wuesthoff**
**Patentanwälte PartG mbB**
**Schweigerstrasse 2**
**81541 München (DE)**

(54) **WIRE ELECTRIC DISCHARGE MACHINE AND METHOD OF CONTROLLING WIRE ELECTRIC DISCHARGE MACHINE**

(57)    This wire electric discharge machine (10) comprises: a relative movement control unit (34) that performs an end surface detection operation a predetermined number of times; a storage control unit (38) that stores, in a storage unit (24), a relative location of a wire electrode to a workpiece table when it is determined that a wire electrode (12) is in contact with a workpiece (14) in each end surface detection operation; a data extraction unit (40) that extracts, as effective data, a plurality of relative locations located in the order of a predetermined range in a middle when the plurality of relative locations are arranged in ascending order; and an end surface location determination unit (46) that determines the location of an end surface of the workpiece on the basis of the effective data.

FIG. 1

**Description**

TECHNICAL FIELD

The present invention relates to a wire electrical (electric) discharge machine configured to detect an end surface position of a placed object placed on a work table, by applying a voltage between a wire electrode and the placed object, as well as to a control method of controlling the wire electrical discharge machine.

BACKGROUND ART

In JP 2004-314191 A, a wire electrical discharge machine is disclosed. Such a wire electrical discharge machine, according to the following method, detects the position of a workpiece (an object to be machined) that is placed on a work table. The wire electrical discharge machine brings a wire electrode closer to the workpiece which is placed on the work table, in a state in which a voltage is applied between the wire electrode and the workpiece. Thereafter, the position of the workpiece is detected on the basis of the position of the wire electrode at a time when the voltage between the wire electrode and the workpiece has decreased.

SUMMARY OF THE INVENTION

A placed object such as a workpiece which is placed on a work table may have an oil film, sludge, or the like adhered to a surface thereof. Further, a wire electrode may become bent due to curling of the wire electrode, vibration, or the like. Therefore, in the case one attempts to determine the position of the placed object by bringing the wire electrode into contact with the placed object, as in the technique disclosed in JP 2004-314191 A, a problem arises in that the detection accuracy of the position of the placed object decreases.

The present invention has been devised with the aim of solving the aforementioned problem, and has the object of providing a wire electrical discharge machine which is capable of detecting with higher accuracy the position of an object placed on a work table, together with a method of controlling such a wire electrical discharge machine.

A first aspect of the present invention is characterized by a wire electrode discharge machine configured to detect an end surface position of a placed object that is placed on a work table by applying a voltage between a wire electrode and the placed object, the wire electrical discharge machine including a voltage detection unit configured to detect a voltage between the wire electrode and the placed object, a determination unit configured to determine, based on the detected voltage, whether or not the wire electrode has come into contact with the placed object, a relative movement control unit configured to cause an end surface detection operation to be performed a predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to a movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to a movement starting position, a storage control unit configured to, in each of the end surface detection operations, store in a storage unit a relative position of the wire electrode with respect to the work table at a time when it is determined that the wire electrode has come into contact with the placed object or at a time when it is determined that the wire electrode has separated away from the placed object, a data extraction unit configured to, in a case that a plurality of the relative positions are arranged in an ascending order, extract, as valid data, a plurality of relative positions that are positioned in a predetermined range that lies in a middle of the order, and an end surface position determination unit configured to determine the end surface position of the placed object based on the valid data.

A second aspect of the present invention is characterized by a method of controlling a wire electrical discharge machine configured to detect an end surface position of a placed object that is placed on a work table by applying a voltage between a wire electrode and the placed object, wherein the wire electrical discharge machine includes a voltage detection unit configured to detect a voltage between the wire electrode and the placed object, the method of controlling the wire electrical discharge machine including a relative movement control step of causing an end surface detection operation to be performed a predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to a movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to the movement starting position, a storage control step of, in each of the end surface detection operations, storing in a storage unit a relative position of the wire electrode with respect to the work table at a time when it is determined that the wire electrode has come into contact with the placed object or at a time when it is determined that the wire electrode has separated away from the placed object, a data extraction step of, in a case that a plurality of the relative positions are arranged in an ascending order, extracting, as valid data, a plurality of relative positions that are positioned in a predetermined range that lies in a middle of the order, and an end surface position determination step of determining the end surface position of the placed object based on the valid data.

According to the present invention, the position of the object that is placed on the work table can be detected with higher accuracy.

BRIEF DESCRIPTION OF DRAWINGS

FIG. 1 is a configuration diagram of a wire electrical discharge machine;
FIG. 2 is a diagram for explaining extraction of valid data;
FIG. 3 is a flowchart showing a process flow of an end surface position detection process carried out in a control device;
FIG. 4 is a configuration diagram of a wire electrical discharge machine;
FIG. 5 is a flowchart showing a process flow of an end surface position detection process carried out in a control device;
FIG. 6 is a configuration diagram of a wire electrical discharge machine;
FIG. 7 is a flowchart showing a process flow of an end surface position detection process carried out in a control device;
FIG. 8 is a diagram showing an example of an image for evaluation of the accuracy of the end surface position of a workpiece displayed on a notification unit; and
FIG. 9 is a flowchart showing a process flow of an end surface position detection process carried out in a control device.

DETAILED DESCRIPTION OF THE INVENTION

[First Embodiment]

[Wire Electrical Discharge Machine]

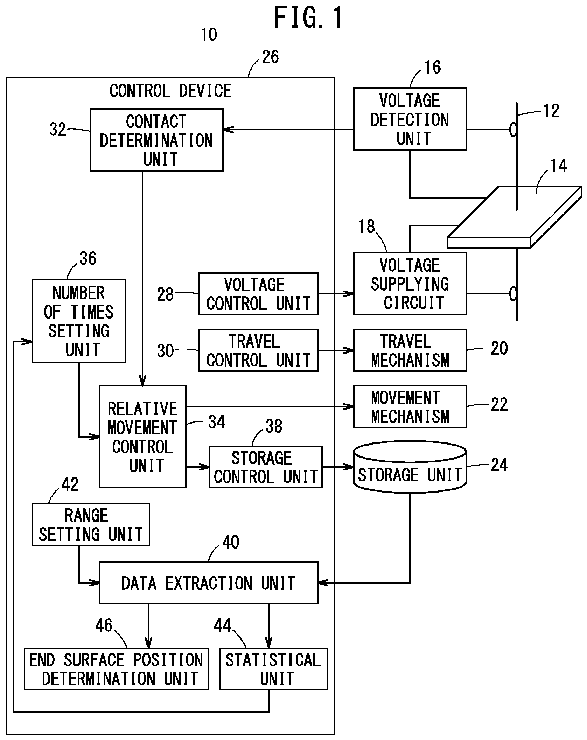

FIG. 1 is a configuration diagram of a wire electrical discharge machine 10. The wire electrical discharge machine 10 carries out machining by generating an electric discharge in an inter-electrode gap between a wire electrode 12 and a workpiece (placed object) 14 while the wire electrode 12 is made to move relatively to the workpiece 14. The workpiece 14 is placed on a non-illustrated work table. By moving the work table in an X-axis direction and a Y-axis direction, the wire electrode 12 moves relatively with respect to the workpiece 14.

The wire electrical discharge machine 10 includes a voltage detection unit 16, a voltage supplying circuit 18, a travel mechanism 20, a movement mechanism 22, a storage unit 24, and a control device 26. The control device 26 includes a voltage control unit 28, a travel control unit 30, a contact determination unit 32, a relative movement control unit 34, a number of times setting unit 36, a storage control unit 38, a data extraction unit 40, a range setting unit 42, a statistical unit 44, and an end surface position determination unit 46.

The voltage detection unit 16 detects a voltage between the electrodes (hereinafter also referred to as an inter-electrode voltage). The voltage supplying circuit 18 supplies a voltage between the electrodes. The travel mechanism 20 causes the wire electrode 12 to travel from a non-illustrated upper wire guide toward a lower wire guide. The movement mechanism 22 causes the work table to be moved in the X-axis direction and the Y-axis direction, and thereby causes the wire electrode 12 to be moved relatively with respect to the workpiece 14. The storage unit 24, for example, is a recording medium such as a hard disk or a solid state drive (SSD). The work table is positioned between the upper wire guide and the lower wire guide in the Z-axis direction (a vertical direction). The Z-axis direction is a direction perpendicular to the X-axis direction and the Y-axis direction.

The voltage control unit 28 controls the voltage supplying circuit 18, and thereby causes an end surface detection voltage to be applied between the electrodes. The end surface detection voltage is set to a voltage that is lower than the voltage applied between the electrodes in order to cause a discharge to occur between the electrodes during machining of the workpiece 14.

The travel control unit 30 controls the travel mechanism 20, and thereby causes the wire electrode 12 to travel.

The contact determination unit 32 determines whether or not the wire electrode 12 has come into contact with the workpiece 14, based on the inter-electrode voltage detected by the voltage detection unit 16. The contact determination unit 32 determines whether or not the wire electrode 12 has come into contact with the workpiece 14, at a time when the end surface detection voltage is being applied between the electrodes. The contact determination unit 32 determines that the wire electrode 12 has come into contact with the workpiece 14 in the case that the inter-electrode voltage is less than a predetermined voltage, and determines that the wire electrode 12 is separated away from the workpiece 14 in the case that the inter-electrode voltage is greater than or equal to the predetermined voltage.

The relative movement control unit 34 controls the movement mechanism 22, and thereby carries out an end surface detection operation of the wire electrode 12 a predetermined number of times (for example, N times). The end surface detection operation is an operation to move the wire electrode 12 in one round trip, i.e., to move the wire electrode from a position (movement starting position) at which the wire electrode is separated away from the workpiece 14 to a position at which the wire electrode has come into contact with the workpiece 14, and thereafter, return the wire electrode 12 from the position where it has come into contact with the workpiece 14 to the movement starting position. This one round trip operation is counted as an end surface detection operation for one time.

The number of times setting unit 36 sets the predetermined number of times. The predetermined number of times is set on the basis of at least one of a diameter of the wire electrode 12, a resistivity of the workpiece 14, or a surface roughness of the workpiece 14. As the diameter of the wire electrode 12 becomes smaller, the predetermined number of times is set to a greater number of times. As the resistivity of the workpiece 14 becomes greater, the predetermined number of times is set to a greater number of times. As the surface roughness of the workpiece 14 becomes rougher, the predetermined number of times is set to a greater number of times.

The storage control unit 38 causes coordinate values of the X-axis and the Y-axis indicating the relative position of the wire electrode 12 relative to the work table (hereinafter, simply referred to as coordinate values of the wire electrode 12) to be stored in the storage unit 24, at a time when it is determined that the wire electrode 12 has come into contact with the workpiece 14 in each of the end surface detection operation performed multiple times.

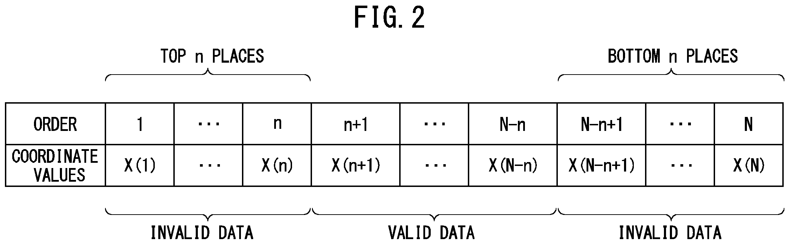

The data extraction unit 40 extracts valid data from among the coordinate values of the wire electrode 12 acquired in each of the multiple end surface detection operations. FIG. 2 is a diagram for explaining the extraction of valid data. Hereinafter, although a description will be given concerning the extraction of valid data for the coordinate values on the X-axis, the extraction of valid data for the coordinate values on the Y-axis is performed in the same way.

The data extraction unit 40 arranges, in ascending order, the coordinate values of the wire electrode 12, which are acquired in each of the end surface detection operations that are carried out the predetermined number of times. In the example shown in FIG. 2, the predetermined number of times is N, the coordinate value of the first place in the order is a minimum value X(1), and the coordinate value of the Nth place in the order becomes a maximum value X(N). Further, the relationship of X(a) ≤ X(a+1) [a = 1 to N-1] is included.

The data extraction unit 40 regards the coordinate values from the 1st place to the nth place, and the coordinate values from the (N-n+1)th place to the Nth place, as invalid data. On the other hand, the data extraction unit 40 extracts as the valid data each of the coordinate values from the (n+1)th place to the (N-n)th place.

The range setting unit 42 sets a range in the order (hereinafter referred to as a predetermined range) within which the coordinate values are regarded as the valid data. The range setting unit 42 may also set a range of the order within which the coordinate values are regarded as the invalid data. The predetermined range is set on the basis of at least one of a diameter of the wire electrode 12, a resistivity of the workpiece 14, or a surface roughness of the workpiece 14. As the diameter of the wire electrode 12 becomes smaller, the predetermined range is set to be narrower. As the resistivity of the workpiece 14 becomes greater, the predetermined range is set to be narrower. As the surface roughness of the workpiece 14 becomes rougher, the predetermined range is set to be narrower.

The statistical unit 44 calculates a difference between the maximum value and the minimum value of the valid data. This difference is utilized as a degree of variation of the valid data. Moreover, it should be noted that a statistical variance or a standard deviation of the valid data may be used as the degree of variation of the valid data. Using the example shown in FIG. 2, when the difference between the maximum value and the minimum value of the valid data is denoted by D, the difference D can be determined by the following equation:

$$D = X(N-n) - X(n+1).$$

The end surface position determination unit 46 determines the end surface position of the workpiece 14 on the basis of the valid data. The end surface position determination unit 46 determines the coordinate values of the end surface position of the workpiece 14 based on, for example, an average of the valid data.

The control device 26 includes a computer equipped with an arithmetic processing unit and a storage, neither of which are shown. The arithmetic processing unit includes, for example, a central processing unit (CPU), a processor such as a microprocessing unit (MPU) or the like, and a memory such as a ROM and a RAM or the like. The storage, for example, is a recording medium such as a hard disk or a solid state drive (SSD). The voltage control unit 28, the travel control unit 30, the contact determination unit 32, the relative movement control unit 34, the number of times setting unit 36, the storage control unit 38, the data extraction unit 40, the range setting unit 42, the statistical unit 44, and the end surface position determination unit 46 are realized by a program that is stored in the storage being executed by the arithmetic processing unit.

[End Surface Position Detection Process]

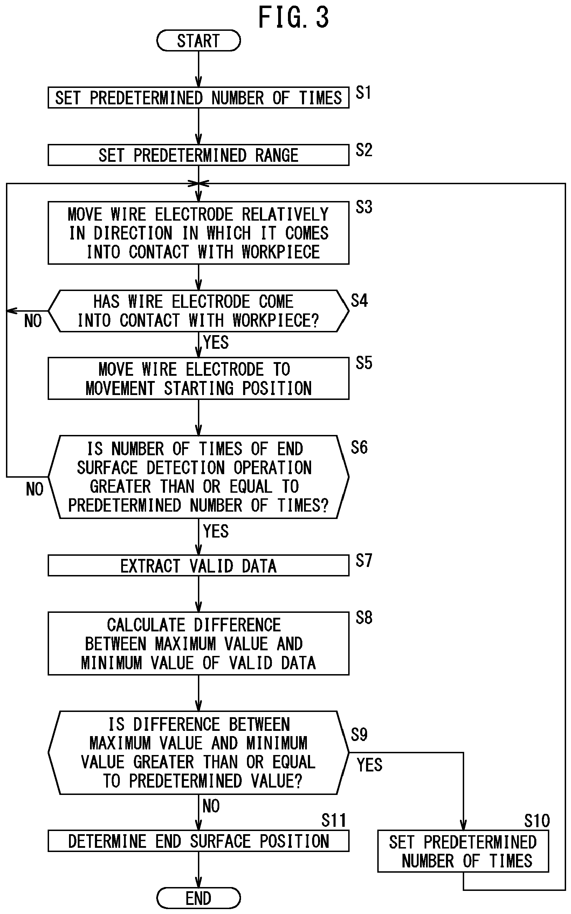

FIG. 3 is a flowchart showing a process flow of the end surface position detection process carried out in the control device 26.

In step S1, the number of times setting unit 36 sets the number of times (the predetermined number of times) that the end surface detection operation is to be carried out. Thereafter, the process transitions to step S2.

In step S2, the range setting unit 42 sets the predetermined range of the order that should be extracted as the valid data. Thereafter, the process transitions to step S3.

In step S3, the relative movement control unit 34 controls the movement mechanism 22, and thereby causes the wire electrode to be moved relatively from a position where the wire electrode 12 is separated away from the workpiece 14 in a direction in which the wire electrode 12 is made to come into contact with the workpiece 14. The voltage control unit 28 controls the voltage supplying circuit 18, and thereby causes the end surface detection voltage to be applied between the electrodes. The travel control unit 30 controls the travel mechanism 20, and thereby causes the wire electrode 12 to travel. Thereafter, the process transitions to step S4.

In step S4, the contact determination unit 32 determines whether or not the wire electrode 12 has come into contact with the workpiece 14. In the case that the wire electrode 12 has come into contact with the workpiece 14, the process transitions to step S5, whereas in the case that the wire electrode 12 has not come into contact with the workpiece 14, the process returns to step S3.

In step S5, the relative movement control unit 34 controls the movement mechanism 22, and thereby causes the wire electrode 12 to be moved to the movement starting position. Thereafter, the process transitions to step S6.

In step S6, the relative movement control unit 34 determines whether or not the number of times of the end surface detection operation is greater than or equal to the predetermined number of times. In the case that the number of times of the end surface detection operation is greater than or equal to the predetermined number of times, the process transitions to step S7, whereas in the case that the number of times of the end surface detection operation is less than the predetermined number of times, the process returns to step S3.

In step S7, the data extraction unit 40 extracts the valid data. Thereafter, the process transitions to step S8.

In step S8, the statistical unit 44 calculates the difference between the maximum value and the minimum value of the valid data. Thereafter, the process transitions to step S9.

In step S9, the statistical unit 44 determines whether or not the difference between the maximum value and the minimum value of the valid data is greater than or equal to a predetermined value. In the case that the difference between the maximum value and the minimum value of the valid data is greater than or equal to the predetermined value, the process transitions to step S10, whereas in the case that the difference between the maximum value and the minimum value of the valid data is less than the predetermined value, the process transitions to step S11. The predetermined value corresponds to a predetermined degree in the present invention.

In step S10, the number of times setting unit 36 sets the predetermined number of times to a number that is greater than the predetermined number of times that was previously set. Thereafter, the process returns to step S3. In accordance with this step, the relative movement control unit 34 performs the end surface detection operation for the predetermined number of times that has been newly set.

In step S11, the end surface position determination unit 46 determines the end surface position of the workpiece 14 on the basis of the valid data. Thereafter, the end surface position detection process is brought to an end.

[Operations and Effects]

At a time when the contact determination unit 32 determines that the wire electrode 12 has come into contact with the workpiece 14, in the case that the end surface position of the workpiece 14 is determined based on the coordinate values of the wire electrode 12, for the reasons mentioned below, a large discrepancy may occur with respect to the actual end surface position.

In the case that the wire electrode 12 comes into contact with sludge or the like that adheres to the workpiece 14, the inter-electrode voltage decreases. In this case, the contact determination unit 32 determines that the wire electrode 12 is in contact with the workpiece 14, even though the wire electrode 12 is not in direct contact with the workpiece 14. The end surface position of the workpiece 14, which is obtained based on the coordinate values of the wire electrode 12 at this time, becomes a position more on an outer side of the workpiece 14 than the actual end surface position of the workpiece 14.

In the case that an oil film is adhered to the workpiece 14, since the electrical conductivity of the oil film is lower than the electrical conductivity of the workpiece 14, even if the wire electrode 12 comes into contact with the workpiece 14, the inter-electrode voltage is not stable. Therefore, at the moment when the wire electrode 12 has come into contact with the workpiece 14, there may be a case in which the contact determination unit 32 determines that the wire electrode 12 is separated away from the workpiece 14. Thereafter, the contact determination unit 32 determines that the wire electrode 12 has come into contact with the workpiece 14, later than the point in time at which the wire electrode 12 actually has come into contact with the workpiece 14. During the period while it is being determined that the wire electrode 12 is separated away from the workpiece 14, the wire electrode 12 continues to move further toward the workpiece 14. Therefore, at the point in time when the contact determination unit 32 has determined that the wire electrode 12 has come into contact with the workpiece 14, a shape is brought about in which the wire electrode 12 is pressed by the workpiece 14 and is bent. The end surface position of the workpiece 14, which is obtained based on the coordinate values of the wire electrode 12 at this time, becomes a position more on an inner side of the workpiece 14 than the actual end surface position of the workpiece 14.

The wire electrode 12 may have a tendency to curl since it is being wound on the bobbin. Further, the wire electrode 12 vibrates at a time when the wire electrode 12 is traveling. Therefore, at a time when the wire electrode 12 comes into contact with the workpiece 14, there may be a situation in which the wire electrode 12 has a curved shape. A situation may occur in which the end surface position of the workpiece 14, which is obtained based on the coordinate values of the wire electrode 12 at this time, becomes a position more on the outer side or the inner side of the workpiece 14 than the actual end surface position of the workpiece 14.

For the aforementioned reasons, concerning the end surface position of the workpiece 14, which is obtained based on the coordinate values of the wire electrode 12 at the time when the contact determination unit 32 has determined that the wire electrode 12 has come into contact with the workpiece 14, a large error may occur with respect to the actual end surface position.

Thus, according to the present embodiment, the relative movement control unit 34 controls the movement mechanism 22, and thereby carries out the end surface detection operation for the predetermined number of times. At a time when it is determined that the wire electrode 12 has come into contact with the workpiece 14 in each of the multiple end surface detection operations, the storage control unit 38 causes the coordinate values of the wire electrode 12 to be stored in the storage unit 24. Furthermore, the data extraction unit 40 arranges the plurality of the coordinate values of the wire electrode 12 that are stored in the storage unit 24, in ascending order, and extracts, as the valid data, the coordinate values whose place in the order lies within the predetermined range. The end surface position determination unit 46 determines the end surface position of the workpiece 14 on the basis of the extracted valid data. In accordance with this feature, the coordinate values for which the error thereof is comparatively small with respect to the actual end surface position of the workpiece 14 are extracted as the valid data, and therefore, the accuracy of the end surface position of the workpiece 14 is improved.

Further, according to the present embodiment, the relative movement control unit 34 controls the movement mechanism 22 in a manner so as to perform the end surface detection operation in a state in which the wire electrode 12 is being made to travel. Consequently, it is possible to remove sludge, an oil film, or the like that is adhered to the surface of the workpiece 14 whose end surface position is to be detected.

Further, according to the present embodiment, the number of times setting unit 36 sets the predetermined number of times. The predetermined number of times is set on the basis of at least one of the diameter of the wire electrode 12, the resistivity of the workpiece 14, or the surface roughness of the workpiece 14. As the diameter of the wire electrode 12 becomes smaller, the predetermined number of times is set to a greater number of times. As the resistivity of the workpiece 14 becomes greater, the predetermined number of times is set to a greater number of times. As the surface roughness of the workpiece 14 becomes rougher, the predetermined number of times is set to a greater number of times.

The amplitude of the vibration of the wire electrode 12 becomes greater as the diameter of the wire electrode 12 becomes smaller. Further, as the resistivity of the workpiece 14 becomes larger, the inter-electrode voltage becomes less stable at the time when the wire electrode 12 is placed in contact with the workpiece 14. Further, as the surface roughness of the workpiece 14 becomes rougher, the position at which the wire electrode 12 comes into contact with the workpiece 14 changes more greatly in each of the multiple times of the end surface detection operation. More specifically, as the diameter of the wire electrode 12 becomes smaller, as the resistivity of the workpiece 14 becomes greater, or as the surface roughness of the workpiece 14 becomes rougher, in each of the multiple end surface detection operations, the variation in the coordinate values of the wire electrode 12 becomes greater at the time when it is determined that the wire electrode 12 has come into contact with the workpiece 14.

Since the predetermined number of times is set to a greater number of times as the diameter of the wire electrode 12 becomes smaller, as the resistivity of the workpiece 14 becomes greater, or as the surface roughness of the workpiece 14 becomes rougher, the distribution of the coordinate values of the wire electrode 12 that are stored in the storage unit 24 can be brought closer to a normal distribution. Since the coordinate values located in the center of the distribution of the coordinate values that is close to the normal distribution are extracted as the valid data, the accuracy of the end surface position of the workpiece 14 is improved.

Further, according to the present embodiment, the range setting unit 42 sets the predetermined range. The predetermined range is set on the basis of at least one of the diameter of the wire electrode 12, the resistivity of the workpiece 14, or the surface roughness of the workpiece 14. As the diameter of the wire electrode 12 becomes smaller, the predetermined range is set so that the range becomes narrower. As the resistivity of the workpiece 14 becomes greater, the predetermined range is set so that the range becomes narrower. As the surface roughness of the workpiece 14 becomes rougher, the predetermined range is set so that the range becomes narrower. In accordance with this feature, the coordinate values for which the error thereof is comparatively small with respect to the actual end surface position of the workpiece 14 are extracted as the valid data, and therefore, the accuracy of the end surface position of the workpiece 14 is improved.

Further, according to the present embodiment, in the case that the difference between the maximum value and the minimum value of the valid data is greater than or equal to the predetermined value, the relative movement control unit 34 controls the movement mechanism 22, and thereby carries out the end surface detection operation again for the predetermined number of times. The difference between the maximum value and the minimum value of the valid data is calculated as the degree of variation of the valid data. In accordance with this feature, the end surface position of the workpiece 14 is determined based on the valid data for which the variation therein is small, and therefore, the accuracy of the end surface position of the workpiece 14 is improved.

Further, according to the present embodiment, in the case that the difference between the maximum value and the minimum value of the valid data is greater than or equal to the predetermined value, the number of times setting unit 36 sets the predetermined number of times to be greater than the currently set predetermined number of times. Consequently, since the number of times of the end surface detection operation increases, the distribution of the coordinate values that are stored in the storage unit 24 can be brought closer to a normal distribution. Since the coordinate values in the center of the distribution of the coordinate values that is close to the normal distribution are extracted as the valid data, the accuracy of the end surface position of the workpiece 14 is improved.

(Second Embodiment)

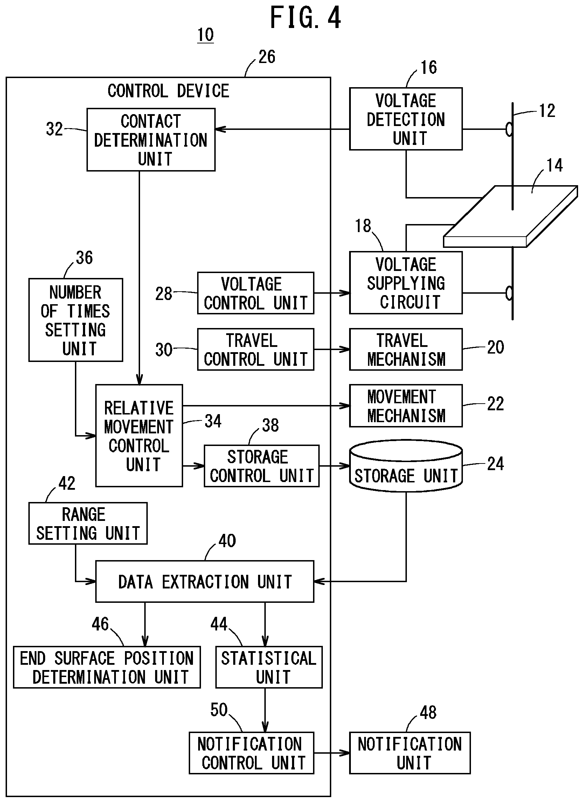

FIG. 4 is a configuration diagram of the wire electrical discharge machine 10. The wire electrical discharge machine 10 according to the present embodiment differs partially in terms of its configuration with respect to the wire electrical discharge machine 10 according to the first embodiment. In addition to the configuration of the wire electrical discharge machine 10 according to the first embodiment, the wire electrical discharge machine 10 according to the present embodiment includes a notification unit 48, and in addition, a notification control unit 50 of the control device 26.

The notification unit 48 is a display device that displays characters, images, or the like, an acoustic device that emits a voice or the like, or an indicator lamp that illuminates light or emits flashing light or the like. The notification control unit 50 controls the notification unit 48 to issue a notification to the user.

[End Surface Position Detection Process]

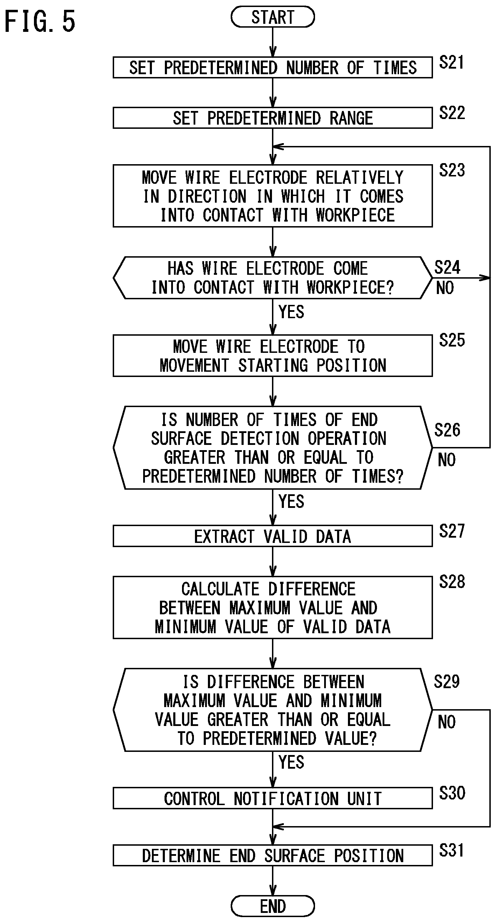

FIG. 5 is a flowchart showing a process flow of the end surface position detection process carried out in the control device 26.

In step S21, the number of times setting unit 36 sets the number of times (the predetermined number of times) that the end surface detection operation is to be carried out. Thereafter, the process transitions to step S22.

In step S22, the range setting unit 42 sets the predetermined range of the order to be extracted as the valid data. Thereafter, the process transitions to step S23.

In step S23, the relative movement control unit 34 controls the movement mechanism 22, and thereby causes the wire electrode 12 to be moved relatively in a direction in which the wire electrode 12 is mode to come into contact with the workpiece 14. The voltage control unit 28 controls the voltage supplying circuit 18, and thereby causes the end surface detection voltage to be applied between the electrodes. The travel control unit 30 controls the travel mechanism 20, and thereby causes the wire electrode 12 to travel. Thereafter, the process transitions to step S24.

In step S24, the contact determination unit 32 determines whether or not the wire electrode 12 has come into contact with the workpiece 14. In the case that the wire electrode 12 has come into contact with the workpiece 14, the process transitions to step S25, whereas in the case that the wire electrode 12 has not come into contact with the workpiece 14, the process returns to step S23.

In step S25, the relative movement control unit 34 controls the movement mechanism 22, and thereby causes the wire electrode 12 to be moved to the movement starting position. Thereafter, the process transitions to step S26.

In step S26, the relative movement control unit 34 determines whether or not the number of times of the end surface detection operation is greater than or equal to the predetermined number of times. In the case that the number of times of the end surface detection operation is greater than or equal to the predetermined number of times, the process transitions to step S27, whereas in the case that the number of times of the end surface detection operation is less than the predetermined number of times, the process returns to step S23.

In step S27, the data extraction unit 40 extracts the valid data. Thereafter, the process transitions to step S28.

In step S28, the statistical unit 44 calculates the difference between the maximum value and the minimum value of the valid data. Thereafter, the process transitions to step S29.

In step S29, the statistical unit 44 determines whether or not the difference between the maximum value and the minimum value of the valid data is greater than or equal to the predetermined value. In the case that the difference between the maximum value and the minimum value of the valid data is greater than or equal to the predetermined value, the process transitions to step S30, whereas in the case that the difference between the maximum value and the minimum value of the valid data is less than the predetermined value, the process transitions to step S31.

In step S30, the notification control unit 50 controls the notification unit 48 to issue a notification to the user. Thereafter, the process transitions to step S31. On the notification unit 48, which for example is a display device, the notification control unit 50 controls the notification unit 48, and thereby causes there to be displayed on the notification unit 48 characters or an image or the like to indicate that the accuracy of the detected end surface position of the workpiece 14 is low. The notification control unit 50 controls the notification unit 48, which for example is an acoustic device, and thereby causes there to be output from the notification unit 48 a voice to indicate that the accuracy of the detected end surface position of the workpiece 14 is low. For example, in the case that the notification unit 48 is an LED, the notification control unit 50 controls the notification unit 48, and thereby causes the notification unit 48, which is an LED, to illuminate light or emit flashing light or the like to indicate that the accuracy of the detected end surface position of the workpiece 14 is low.

In step S31, the end surface position determination unit 46 determines the end surface position of the workpiece 14 on the basis of the valid data. Thereafter, the end surface position detection process is brought to an end.

[Operations and Effects]

According to the present embodiment, the notification control unit 50 controls the notification unit 48, and thereby issues a notification to the user, in the case that the difference between the maximum value and the minimum value of the valid data is greater than or equal to the predetermined value. Consequently, the user can be informed that the accuracy of the detected end surface position of the workpiece 14 is low.

(Third Embodiment)

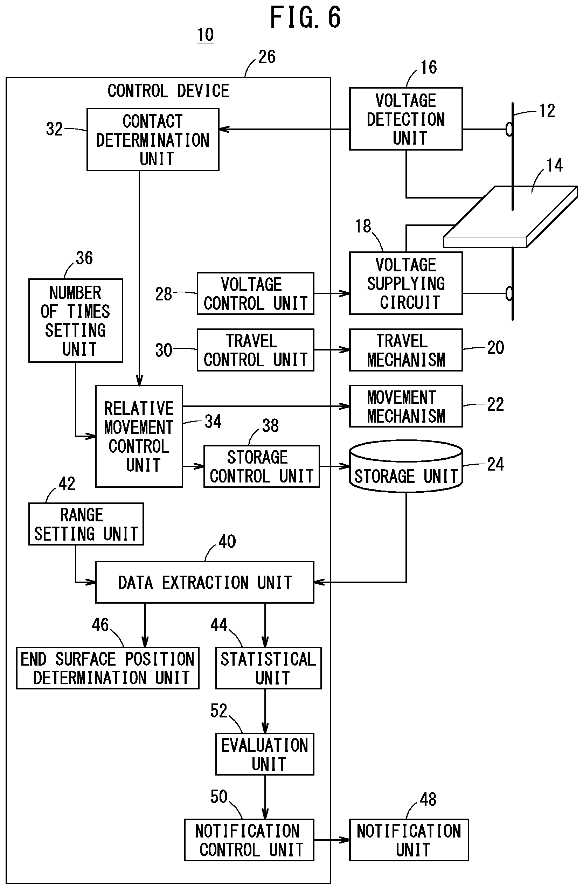

FIG. 6 is a configuration diagram of the wire electrical discharge machine 10. The wire electrical discharge machine 10 according to the present embodiment differs partially in terms of its configuration with respect to the wire electrical discharge machine 10 according to the first embodiment. In addition to the configuration of the wire electrical discharge machine 10 according to the first embodiment, the wire electrical discharge machine 10 according to the present embodiment includes a notification unit 48, and in addition, a notification control unit 50 and an evaluation unit 52 of the control device 26.

The notification unit 48 is a display device that displays characters, images, or the like, an acoustic device that emits a voice or the like, or an indicator lamp that illuminates light or emits flashing light or the like. The notification control unit 50 controls the notification unit 48 to issue a notification to the user. Based on a variation of the valid data, the evaluation unit 52 evaluates the accuracy of the end surface position of the workpiece 14 that has been determined by the end surface position determination unit 46.

[End Surface Position Detection Process]

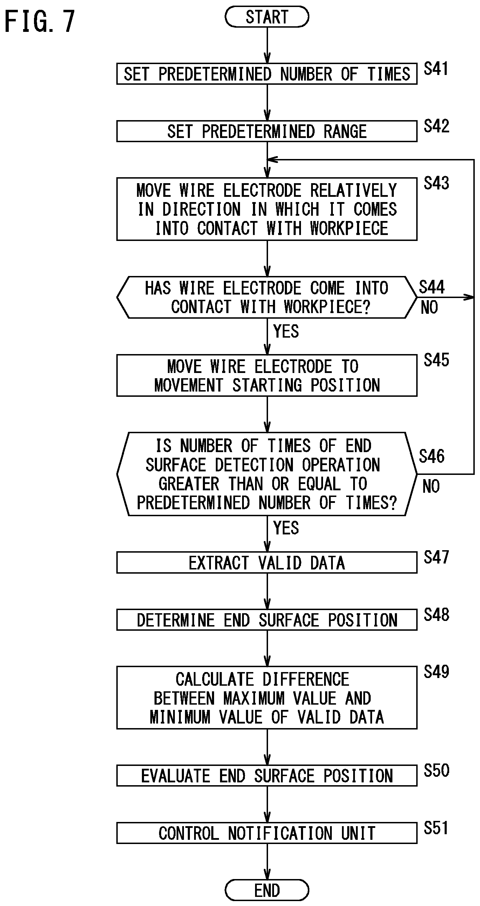

FIG. 7 is a flowchart showing a process flow of the end surface position detection process carried out in the control device 26.

In step S41, the number of times setting unit 36 sets the number of times (the predetermined number of times) that the end surface detection operation is to be carried out. Thereafter, the process transitions to step S42.

In step S42, the range setting unit 42 sets the predetermined range of the order to be extracted as the valid data. Thereafter, the process transitions to step S43.

In step S43, the relative movement control unit 34 controls the movement mechanism 22, and thereby causes the wire electrode to be moved relatively in a direction in which the wire electrode 12 is made to come into contact with the workpiece 14. The voltage control unit 28 controls the voltage supplying circuit 18, and thereby causes the end surface detection voltage to be applied between the electrodes. The travel control unit 30 controls the travel mechanism 20, and thereby causes the wire electrode 12 to travel. Thereafter, the process transitions to step S44.

In step S44, the contact determination unit 32 determines whether or not the wire electrode 12 has come into contact with the workpiece 14. In the case that the wire electrode 12 has come into contact with the workpiece 14, the process transitions to step S45, whereas in the case that the wire electrode 12 has not come into contact with the workpiece 14, the process returns to step S43.

In step S45, the relative movement control unit 34 controls the movement mechanism 22, and thereby causes the wire electrode 12 to be moved to the movement starting position. Thereafter, the process transitions to step S46.

In step S46, a determination is made as to whether or not the number of times of the end surface detection operation is greater than or equal to the predetermined number of times. In the case that the number of times of the end surface detection operation is greater than or equal to the predetermined number of times, the process transitions to step S47, whereas in the case that the number of times of the end surface detection operation is less than the predetermined number of times, the process returns to step S43.

In step S47, the data extraction unit 40 extracts the valid data. Thereafter, the process transitions to step S48.

In step S48, the end surface position determination unit 46 determines the end surface position of the workpiece 14 on the basis of the valid data. Thereafter, the process transitions to step S49.

In step S49, the statistical unit 44 calculates the difference between the maximum value and the minimum value of the valid data. Thereafter, the process transitions to step S50.

In step S50, based on the difference between the maximum value and the minimum value of the valid data, the evaluation unit 52 evaluates the accuracy of the end surface position of the workpiece 14 that has been determined in step S48. Thereafter, the process transitions to step S51. The evaluation unit 52 evaluates the accuracy of the end surface position of the workpiece 14 to be lower as the difference between the maximum value and the minimum value of the valid data becomes greater. Instead of the difference between the maximum value and the minimum value of the valid data, the accuracy of the end surface position of the workpiece 14 may be evaluated based on the difference between the maximum value and the minimum value of all of the coordinate values stored in the storage unit 24. Instead of the difference between the maximum value and the minimum value of the valid data, the accuracy of the end surface position of the workpiece 14 may be evaluated based on a variance or a standard deviation of the valid data. Instead of the difference between the maximum value and the minimum value of the valid data, the accuracy of the end surface position of the workpiece 14 may be evaluated based on a variance or a standard deviation of all of the coordinate values stored in the storage unit 24.

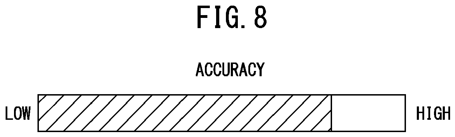

In step S51, the notification control unit 50 controls the notification unit 48 to issue to the user a notification of the evaluation of the accuracy of the end surface position of the workpiece 14. Thereafter, the end surface position detection process is brought to an end. The notification control unit 50 controls the notification unit 48, which for example is a display device, and thereby causes there to be displayed on the notification unit 48 characters or an image or the like to indicate the evaluation of the accuracy of the end surface position of the workpiece 14. FIG. 8 is a diagram showing an example of an image for evaluation of the accuracy of the end surface position of the workpiece 14 displayed on the notification unit 48. As shown in FIG. 8, the evaluation may be indicated by a percentage of a colored range existing within a rectangular shape. In FIG. 8, such a colored range is indicated by hatching. The notification control unit 50 may control the notification unit 48, which for example is an acoustic device, and thereby cause there to be output from the notification unit 48 a voice to indicate the evaluation of the accuracy of the detected end surface position of the workpiece 14. For example, in the case that the notification unit 48 is an LED, the notification control unit 50 controls the notification unit 48 which is an LED, and thereby causes the notification unit 48 to illuminate light or emit flashing light or the like to indicate that the accuracy of the detected end surface position of the workpiece 14 is low. For example, in the case that the evaluation is high, the notification unit 48 may be turned off, ation is high, the notification unit 48 may be turned off, in the case that the evaluation is low, the notification unit 48 may be made to emit flashing light, and in the case that the evaluation is of an intermediate degree, the notification unit 48 may be made to illuminate light.

(Fourth Embodiment)

The wire electrical discharge machine 10 according to the present embodiment has the same configuration as the wire electrical discharge machine 10 of the first embodiment, but differs from the first embodiment in terms of the end surface detection operation.

The relative movement control unit 34 controls the movement mechanism 22, and thereby carries out the end surface detection operation a predetermined number of times (for example, N times). The end surface detection operation according to the present embodiment is an operation to move the wire electrode 12 in one round trip, i.e., to move from a position (movement starting position) at which the wire electrode is in contact with the workpiece 14 to a position at which the wire electrode has separated away from the workpiece 14, and thereafter, to return the wire electrode 12 from the position where it has separated away from the workpiece 14 to the movement starting position. This one round trip operation is counted as an end surface detection operation for one time.

[End Surface Position Detection Process]

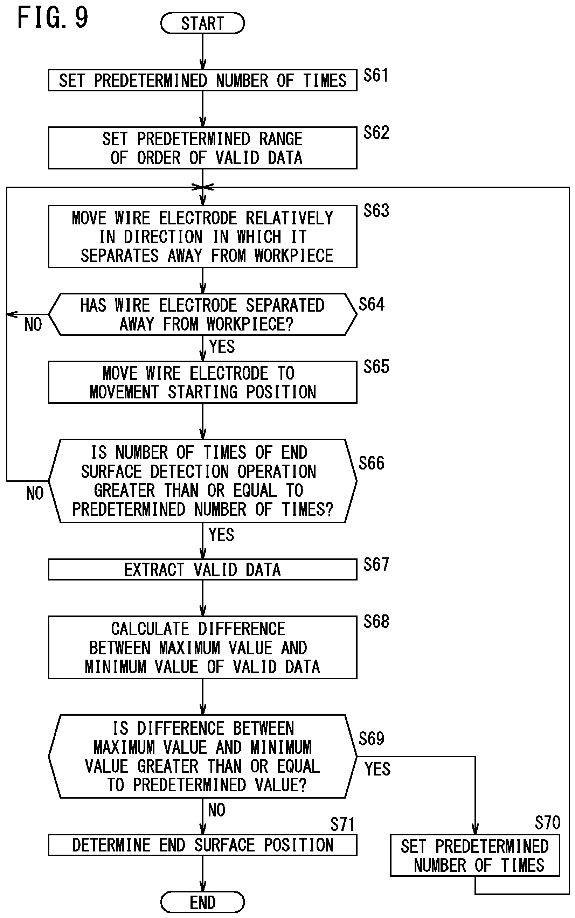

FIG. 9 is a flowchart showing a process flow of the end surface position detection process carried out in the control device 26.

In step S61, the number of times setting unit 36 sets the number of times (the predetermined number of times) that the end surface detection operation is to be carried out. Thereafter, the process transitions to step S62.

In step S62, the range setting unit 42 sets the predetermined range of the order to be extracted as the valid data. Thereafter, the process transitions to step S63.

In step S63, the relative movement control unit 34 controls the movement mechanism 22, and thereby causes the wire electrode 12 to be moved relatively from a position where the wire electrode 12 is placed in contact with the workpiece 14 in a direction in which the wire electrode 12 is made to separate away from the workpiece 14. The voltage control unit 28 controls the voltage supplying circuit 18, and thereby causes the end surface detection voltage to be applied between the electrodes. The travel control unit 30 controls the travel mechanism 20, and thereby causes the wire electrode 12 to travel. Thereafter, the process transitions to step S64.

In step S64, the contact determination unit 32 determines whether or not the wire electrode 12 has separated away from the workpiece 14. In the case that the wire electrode 12 has separated away from the workpiece 14, the process transitions to step S65, whereas in the case that the wire electrode 12 has not separated away from the workpiece 14, the process returns to step S63.

In step S65, the relative movement control unit 34 controls the movement mechanism 22, and thereby causes the wire electrode 12 to be moved to the movement starting position. Thereafter, the process transitions to step S66.

In step S66, the relative movement control unit 34 determines whether or not the number of times of the end surface detection operation is greater than or equal to the predetermined number of times. In the case that the number of times of the end surface detection operation is greater than or equal to the predetermined number of times, the process transitions to step S67, whereas in the case that the number of times of the end surface detection operation is less than the predetermined number of times, the process returns to step S63.

In step S67, the data extraction unit 40 extracts the valid data. Thereafter, the process transitions to step S68.

In step S68, the statistical unit 44 calculates the difference between the maximum value and the minimum value of the valid data. Thereafter, the process transitions to step S69.

In step S69, the statistical unit 44 determines whether or not the difference between the maximum value and the minimum value of the valid data is greater than or equal to a predetermined value. In the case that the difference between the maximum value and the minimum value of the valid data is greater than or equal to the predetermined value, the process transitions to step S70, whereas in the case that the difference between the maximum value and the minimum value of the valid data is less than the predetermined value, the process transitions to step S71.

In step S70, the number of times setting unit 36 sets the predetermined number of times to a number that is greater than the predetermined number of times that was previously set. Thereafter, the process returns to step S63. In accordance with this step, the relative movement control unit 34 performs the end surface detection operation for the predetermined number of times that has been newly set.

In step S71, the end surface position determination unit 46 determines the end surface position of the workpiece 14 on the basis of the valid data. Thereafter, the end surface position detection process is brought to an end.

[Operations and Effects]

In the present embodiment, the relative movement control unit 34 controls the movement mechanism 22, and thereby carries out the end surface detection operation for the predetermined number of times. At a time when it is determined that the wire electrode 12 has separated away from the workpiece 14 in each of the multiple times of the end surface detection operation, the storage control unit 38 causes the storage unit 24 to store the coordinate values of the wire electrode 12. Furthermore, the data extraction unit 40 arranges the plurality of the coordinate values of the wire electrode 12 that are stored in the storage unit 24 in ascending order, and extracts as the valid data each of the coordinate values whose place in the order lies within the predetermined range. The end surface position determination unit 46 determines the end surface position of the workpiece 14 on the basis of the extracted valid data. In accordance with this feature, the coordinate values for which the error thereof is comparatively small with respect to the actual end surface position of the workpiece 14 are extracted as the valid data, and therefore, the accuracy of the end surface position of the workpiece 14 is improved.

(Other Embodiments)

In the wire electrical discharge machine 10 according to the first to fourth embodiments, the end surface position of the workpiece 14 on the work table is detected, however, without being limited to the workpiece 14, the end surface position of a jig that is placed on the work table may be detected.

(Inventions that can be Obtained from the Embodiments)

The inventions that are capable of being grasped from the above-described embodiments will be described below.

In the wire electrical discharge machine (10) that detects the end surface position of the placed object (14) that is placed on the work table by applying the voltage between the wire electrode (12) and the placed object, the wire electrical discharge machine includes the voltage detection unit (16) that detects the voltage between the wire electrode and the placed object, the determination unit (32) that determines, based on the detected voltage, whether or not the wire electrode has come into contact with the placed object, the relative movement control unit (34) that causes the end surface detection operation to be performed the predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to a movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to the movement starting position, the storage control unit (38) that, in each of the end surface detection operations, stores in the storage unit (24) the relative position of the wire electrode with respect to the work table at a time when it is determined that the wire electrode has come into contact with the placed object or at a time when it is determined that the wire electrode has separated away from the placed object, the data extraction unit (40) that, in the case that the plurality of relative positions are arranged in ascending order, extracts, as the valid data, the plurality of the relative positions that are positioned in the predetermined range that lies in a middle of the order; and the end surface position determination unit (46) that determines the end surface position of the placed object on the basis of the valid data.

In the above-described wire electrical discharge machine, the relative movement control unit may cause the end surface detection operation to be performed in a state in which the wire electrode is being made to travel.

In the above-described wire electrical discharge machine, there may further be provided the number of times setting unit (36) that sets the predetermined number of times based on at least one of the diameter of the wire electrode, the resistivity of the placed object, or the surface roughness of the placed object, in a manner so that the predetermined number of times becomes greater as the diameter of the wire electrode becomes smaller, as the resistivity of the placed object becomes higher, or as the surface roughness of the placed object becomes higher.

In the above-described wire electrical discharge machine, there may further be provided the range setting unit (42) that sets the predetermined range based on at least one of the diameter of the wire electrode, the resistivity of the placed object, or the surface roughness of the placed object, in a manner so that the predetermined range becomes narrower as the diameter of the wire electrode becomes smaller, as the resistivity of the placed object becomes higher, or as the surface roughness of the placed object becomes higher.

In the above-described wire electrical discharge machine, there may further be provided the statistical unit (44) that calculates the degree of variation in the plurality of the valid data, wherein, in the case that the calculated degree of variation in the valid data is greater than or equal to the predetermined degree, the relative movement control unit causes the end surface detection operation to be performed again for the predetermined number of times.

In the above-described wire electrical discharge machine, there may further be provided the number of times setting unit that sets the predetermined number of times in a manner so as to become greater than the currently set predetermined number of times, in the case that the calculated degree of variation in the valid data is greater than or equal to the predetermined degree.

In the above-described wire electrical discharge machine, there may further be provided the statistical unit that calculates the degree of variation in the plurality of the valid data, and the notification control unit (50) that controls the notification unit (48) so as to issue the notification to the user, in the case that the calculated degree of variation in the valid data is greater than or equal to the predetermined degree.

In the above-described wire electrical discharge machine, there may further be provided the statistical unit that calculates the degree of variation in at least one of the plurality of the valid data or the plurality of relative positions stored in the storage unit, the evaluation unit (52) that evaluates, based on the calculated degree, the accuracy of the end surface position of the placed object that has been determined, and the notification control unit that controls the notification unit so as to issue, to the user, a notification of the evaluation of the accuracy of the end surface position of the placed object.

In the method of controlling the wire electrical discharge machine (10) that detects the end surface position of the placed object that is placed on the work table by applying the voltage between the wire electrode (12) and the placed object (14), wherein the wire electrical discharge machine includes the voltage detection unit (16) that detects the voltage between the wire electrode and the placed object, the method of controlling the wire electrical discharge machine, includes the relative movement control step of causing the end surface detection operation to be performed the predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to the movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to the movement starting position, the storage control step of, in each of the end surface detection operations, storing in the storage unit (24) the relative position of the wire electrode with respect to the work table at a time when it is determined that the wire electrode has come into contact with the placed object or at a time when it is determined that the wire electrode has separated away from the placed object, the data extraction step of, in the case that the plurality of the relative positions are arranged in an ascending order, extracting, as the valid data, the plurality of relative positions that are positioned in the predetermined range that lies in a middle of the order, and the end surface position determination step of determining the end surface position of the placed object on the basis of the valid data.

In the above-described method of controlling the wire electrical discharge machine, in the relative movement control step, the end surface detection operation may be performed in a state in which the wire electrode is being made to travel.

In the above-described method of controlling the wire electrical discharge machine, there may further be provided the number of times setting step of setting the predetermined number of times based on at least one of the diameter of the wire electrode, the resistivity of the placed object, or the surface roughness of the placed object, in a manner so that the predetermined number of times becomes greater as the diameter of the wire electrode becomes smaller, as the resistivity of the placed object becomes higher, or as the surface roughness of the placed object becomes higher.

In the above-described method of controlling the wire electrical discharge machine, there may further be provided the range setting step of setting the predetermined range based on at least one of the diameter of the wire electrode, the resistivity of the placed object, or the surface roughness of the placed object, in a manner so that the predetermined range becomes narrower as the diameter of the wire electrode becomes smaller, as the resistivity of the placed object becomes higher, or as the surface roughness of the placed object becomes higher.

In the above-described method of controlling the wire electrical discharge machine, there may further be provided the statistical step of calculating the degree of variation in the plurality of the valid data, wherein, in the case that the calculated degree of variation in the valid data is greater than or equal to the predetermined degree, the method may return to the relative movement control step, and the end surface detection operation may be performed again for the predetermined number of times.

In the above-described method of controlling the wire electrical discharge machine, there may further be provided the second number of times setting step of setting the predetermined number of times in a manner so as to become greater than the currently set predetermined number of times, in the case that the calculated degree of variation in the valid data is greater than or equal to the predetermined degree.

In the above-described method of controlling the wire electrical discharge machine, there may further be provided the statistical step of calculating the degree of variation in the plurality of the valid data, and the notification control step of controlling the notification unit so as to issue a notification to the user, in the case that the calculated degree of variation in the valid data is greater than or equal to the predetermined degree.

**Claims**

1. A wire electrical discharge machine (10) configured to detect an end surface position of a placed object (14) that is placed on a work table by applying a voltage between a wire electrode (12) and the placed object, the wire electrical discharge machine comprising:

   a voltage detection unit (16) configured to detect a voltage between the wire electrode and the placed object;
   a determination unit (32) configured to determine, based on the detected voltage, whether or not the wire electrode has come into contact with the placed object;
   a relative movement control unit (34) configured to cause an end surface detection operation to be performed a predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to a movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to a movement starting position;
   a storage control unit (38) configured to, in each of the end surface detection operations, store in a storage unit (24) a relative position of the wire electrode with respect to the work table at a time when it is determined that the wire electrode has come into contact with the placed object or at a time when it is determined that the wire electrode has separated away from the placed object;
   a data extraction unit (40) configured to, in a case that a plurality of the relative positions are arranged in an ascending order, extract, as valid data, a plurality of relative positions that are positioned in a predetermined range that lies in a middle of the order; and
   an end surface position determination unit (46) configured to determine the end surface position of the placed object based on the valid data.

2. The wire electrical discharge machine according to claim 1, wherein the relative movement control unit causes the end surface detection operation to be performed in a state in which the wire electrode is being made to travel.

3. The wire electrical discharge machine according to claim 1 or 2, further comprising a number of times setting unit (36) configured to set the predetermined number of times based on at least one of a diameter of the wire electrode, a resistivity of the placed object, or a surface roughness of the placed object, in a manner so that the predetermined number of times becomes greater as the diameter of the wire electrode becomes smaller, as the resistivity of the placed object becomes higher, or as the surface roughness of the placed object becomes higher.

4. The wire electrical discharge machine according to any one of claims 1 to 3, further comprising a range setting unit (42) configured to set the predetermined range based on at least one of a diameter of the wire electrode, a resistivity of the placed object, or a surface roughness of the placed object, in a manner so that the predetermined range becomes narrower as the diameter of the wire electrode becomes smaller, as the resistivity of the placed object becomes higher, or as the surface roughness of the placed object becomes higher.

5. The wire electrical discharge machine according to any one of claims 1 to 4, further comprising:

   a statistical unit (44) configured to calculate a degree of variation in a plurality of the valid data; wherein, in a case that the calculated degree of variation in the valid data is greater than or equal to a predetermined degree, the relative movement control unit causes the end surface detection operation to be performed again for the predetermined number of times.

6. The wire electrical discharge machine according to claim 5, further comprising a number of times setting unit configured to set the predetermined number of times in a manner so as to become greater than the currently set predetermined number of times, in a case that the calculated degree of variation in the valid data is greater than or equal to the predetermined degree.

7. The wire electrical discharge machine according to any one of claims 1 to 6, further comprising:

   a statistical unit configured to calculate a degree of variation in a plurality of the valid data, and a notification control unit (50) configured to control a notification unit (48) so as to issue a notification to a user, in a case that the calculated degree of variation in the valid data is greater than or equal to a predetermined degree.

8. The wire electrical discharge machine according to any one of claims 1 to 7, further comprising:

   a statistical unit configured to calculate a degree of variation in at least one of a plurality of the valid data or the plurality of relative positions stored in the storage unit;

an evaluation unit (52) configured to evaluate, based on the calculated degree, an accuracy of the end surface position of the placed object that has been determined; and a notification control unit configured to control a notification unit so as to issue, to a user, a notification of an evaluation of the accuracy of the end surface position of the placed object.

9. A method of controlling a wire electrical discharge machine (10) configured to detect an end surface position of a placed object (14) that is placed on a work table by applying a voltage between a wire electrode (12) and the placed object, wherein the wire electrical discharge machine includes a voltage detection unit (16) configured to detect a voltage between the wire electrode and the placed object, the method of controlling the wire electrical discharge machine, comprising:

   a relative movement control step of causing an end surface detection operation to be performed a predetermined number of times, in which, from a state in which the wire electrode is separated away from the placed object, the wire electrode moves relatively in a manner so that the wire electrode comes into contact with the placed object, and when it is determined that the wire electrode has come into contact with the placed object, the wire electrode moves to a movement starting position, or alternatively, from a state in which the wire electrode is in contact with the placed object, the wire electrode moves relatively in a manner so that the wire electrode separates away from the placed object, and when it is determined that the wire electrode has separated away from the placed object, the wire electrode moves to a movement starting position; a storage control step of, in each of the end surface detection operations, storing in a storage unit (24) a relative position of the wire electrode with respect to the work table at a time when it is determined that the wire electrode has come into contact with the placed object or at a time when it is determined that the wire electrode has separated away from the placed object; a data extraction step of, in a case that a plurality of the relative positions are arranged in an ascending order, extracting, as valid data, a plurality of relative positions that are positioned in a predetermined range that lies in a middle of the order; and an end surface position determination step of determining the end surface position of the placed object based on the valid data.

10. The method of controlling the wire electrical discharge machine according to claim 9, wherein, in the relative movement control step, the end surface detection operation is performed in a state in which the wire electrode is being made to travel.

11. The method of controlling the wire electrical discharge machine according to claim 9 or 10, further comprising a number of times setting step of setting the predetermined number of times based on at least one of a diameter of the wire electrode, a resistivity of the placed object, or a surface roughness of the placed object, in a manner so that the predetermined number of times becomes greater as the diameter of the wire electrode becomes smaller, as the resistivity of the placed object becomes higher, or as the surface roughness of the placed object becomes higher.

12. The method of controlling the wire electrical discharge machine according to any one of claims 9 to 11, further comprising a range setting step of setting the predetermined range based on at least one of a diameter of the wire electrode, a resistivity of the placed object, or a surface roughness of the placed object, in a manner so that the predetermined range becomes narrower as the diameter of the wire electrode becomes smaller, as the resistivity of the placed object becomes higher, or as the surface roughness of the placed object becomes higher.

13. The method of controlling the wire electrical discharge machine according to any one of claims 9 to 12, further comprising a statistical step of calculating a degree of variation in a plurality of the valid data, wherein, in a case that the calculated degree of variation in the valid data is greater than or equal to a predetermined degree, the method returns to the relative movement control step, and the end surface detection operation is performed again for the predetermined number of times.

14. The method of controlling the wire electrical discharge machine according to claim 13, further comprising a second number of times setting step of setting the predetermined number of times in a manner so as to become greater than the currently set predetermined number of times, in a case that the calculated degree of variation in the valid data is greater than or equal to the predetermined degree.

15. The method of controlling the wire electrical discharge machine according to any one of claims 9 to 14, further comprising:

  a statistical step of calculating a degree of variation in a plurality of the valid data, and
  a notification control step of controlling a notification unit so as to issue a notification to a user, in a case that the calculated degree of variation in the valid data is greater than or equal to a predetermined degree.

# FIG. 1

## FIG. 2

EP 4 234 143 A1

| ORDER | 1 | ··· | n | n+1 | ··· | N−n | N−n+1 | ··· | N |
|---|---|---|---|---|---|---|---|---|---|
| COORDINATE VALUES | X(1) | ··· | X(n) | X(n+1) | ··· | X(N−n) | X(N−n+1) | ··· | X(N) |

TOP n PLACES

BOTTOM n PLACES

INVALID DATA     VALID DATA     INVALID DATA

# FIG. 3

START

SET PREDETERMINED NUMBER OF TIMES | S1

SET PREDETERMINED RANGE | S2

MOVE WIRE ELECTRODE RELATIVELY IN DIRECTION IN WHICH IT COMES INTO CONTACT WITH WORKPIECE | S3

HAS WIRE ELECTRODE COME INTO CONTACT WITH WORKPIECE? | S4
— NO

↓ YES

MOVE WIRE ELECTRODE TO MOVEMENT STARTING POSITION | S5

IS NUMBER OF TIMES OF END SURFACE DETECTION OPERATION GREATER THAN OR EQUAL TO PREDETERMINED NUMBER OF TIMES? | S6
NO

↓ YES

EXTRACT VALID DATA | S7

CALCULATE DIFFERENCE BETWEEN MAXIMUM VALUE AND MINIMUM VALUE OF VALID DATA | S8

IS DIFFERENCE BETWEEN MAXIMUM VALUE AND MINIMUM VALUE GREATER THAN OR EQUAL TO PREDETERMINED VALUE? | S9
YES

↓ NO

DETERMINE END SURFACE POSITION | S11

SET PREDETERMINED NUMBER OF TIMES | S10

END

# FIG. 4

FIG. 5

```
                          ( START )
                              │
                              ▼
        ┌──────────────────────────────────────┐  S21
        │  SET PREDETERMINED NUMBER OF TIMES    │
        └──────────────────────────────────────┘
                              │
                              ▼
        ┌──────────────────────────────────────┐  S22
        │       SET PREDETERMINED RANGE         │
        └──────────────────────────────────────┘
                              │
                              ▼◄──────────────────┐
        ┌──────────────────────────────────────┐  S23
        │    MOVE WIRE ELECTRODE RELATIVELY     │   │
        │    IN DIRECTION IN WHICH IT COMES     │   │
        │     INTO CONTACT WITH WORKPIECE       │   │
        └──────────────────────────────────────┘   │
                              │                     │
                              ▼                     │
          ⟨  HAS WIRE ELECTRODE COME          ⟩  S24│
          ⟨  INTO CONTACT WITH WORKPIECE?     ⟩──NO─┤
                              │ YES                 │
                              ▼                     │
        ┌──────────────────────────────────────┐  S25│
        │       MOVE WIRE ELECTRODE TO          │   │
        │      MOVEMENT STARTING POSITION       │   │
        └──────────────────────────────────────┘   │
                              │                     │
                              ▼                     │
          ⟨  IS NUMBER OF TIMES OF END        ⟩     │
          ⟨  SURFACE DETECTION OPERATION      ⟩  S26│
          ⟨  GREATER THAN OR EQUAL TO         ⟩──NO─┘
          ⟨  PREDETERMINED NUMBER OF TIMES?   ⟩
                              │ YES
                              ▼
        ┌──────────────────────────────────────┐  S27
        │           EXTRACT VALID DATA          │
        └──────────────────────────────────────┘
                              │
                              ▼
        ┌──────────────────────────────────────┐  S28
        │        CALCULATE DIFFERENCE           │
        │     BETWEEN MAXIMUM VALUE AND         │
        │      MINIMUM VALUE OF VALID DATA      │
        └──────────────────────────────────────┘
                              │
                              ▼
          ⟨  IS DIFFERENCE BETWEEN            ⟩  S29
          ⟨  MAXIMUM VALUE AND MINIMUM        ⟩──NO─┐
          ⟨  VALUE GREATER THAN OR EQUAL      ⟩     │
          ⟨  TO PREDETERMINED VALUE?          ⟩     │
                              │ YES                 │
                              ▼                     │
        ┌──────────────────────────────────────┐  S30│
        │       CONTROL NOTIFICATION UNIT       │   │
        └──────────────────────────────────────┘   │
                              │◄───────────────────┘
                              ▼
        ┌──────────────────────────────────────┐  S31
        │     DETERMINE END SURFACE POSITION    │
        └──────────────────────────────────────┘
                              │
                              ▼
                          (  END  )
```

# FIG. 6

# FIG. 7

START

SET PREDETERMINED NUMBER OF TIMES — S41

SET PREDETERMINED RANGE — S42

MOVE WIRE ELECTRODE RELATIVELY IN DIRECTION IN WHICH IT COMES INTO CONTACT WITH WORKPIECE — S43

HAS WIRE ELECTRODE COME INTO CONTACT WITH WORKPIECE? — S44 / NO

YES

MOVE WIRE ELECTRODE TO MOVEMENT STARTING POSITION — S45

IS NUMBER OF TIMES OF END SURFACE DETECTION OPERATION GREATER THAN OR EQUAL TO PREDETERMINED NUMBER OF TIMES? — S46 / NO

YES

EXTRACT VALID DATA — S47

DETERMINE END SURFACE POSITION — S48

CALCULATE DIFFERENCE BETWEEN MAXIMUM VALUE AND MINIMUM VALUE OF VALID DATA — S49

EVALUATE END SURFACE POSITION — S50

CONTROL NOTIFICATION UNIT — S51

END

FIG. 8

ACCURACY

LOW ////////////////////// HIGH

# FIG. 9

```
                    ( START )
                        │
                        ▼
        ┌──────────────────────────────────┐ S61
        │ SET PREDETERMINED NUMBER OF TIMES │
        └──────────────────────────────────┘
                        │
                        ▼
        ┌──────────────────────────────┐ S62
        │     SET PREDETERMINED RANGE   │
        │     OF ORDER OF VALID DATA    │
        └──────────────────────────────┘
                        │
                        ▼
        ┌──────────────────────────────┐ S63
        │ MOVE WIRE ELECTRODE RELATIVELY│
        │      IN DIRECTION IN WHICH IT │
        │ SEPARATES AWAY FROM WORKPIECE │
        └──────────────────────────────┘
                        │
                        ▼
         ╱ HAS WIRE ELECTRODE SEPARATED ╲ S64
    NO  ╱     AWAY FROM WORKPIECE?        ╲
        ╲                                 ╱
         ╲            │ YES              ╱
                      ▼
        ┌──────────────────────────────┐ S65
        │     MOVE WIRE ELECTRODE TO    │
        │   MOVEMENT STARTING POSITION  │
        └──────────────────────────────┘
                      │
                      ▼
         ╱  IS NUMBER OF TIMES OF END   ╲ S66
        ╱ SURFACE DETECTION OPERATION    ╲
   NO  ╱   GREATER THAN OR EQUAL TO       ╲
        ╲ PREDETERMINED NUMBER OF TIMES? ╱
         ╲            │ YES              ╱
                      ▼
        ┌──────────────────────────────┐ S67
        │        EXTRACT VALID DATA     │
        └──────────────────────────────┘
                      │
                      ▼
        ┌──────────────────────────────┐ S68
        │      CALCULATE DIFFERENCE     │
        │    BETWEEN MAXIMUM VALUE AND  │
        │   MINIMUM VALUE OF VALID DATA │
        └──────────────────────────────┘
                      │
                      ▼
         ╱  IS DIFFERENCE BETWEEN       ╲ S69
        ╱ MAXIMUM VALUE AND MINIMUM      ╲ YES
        ╲ VALUE GREATER THAN OR EQUAL    ╱───────┐
         ╲  TO PREDETERMINED VALUE?     ╱         │
                      │ NO                         ▼
                      ▼               ┌─────────────────────┐ S70
        ┌──────────────────────────┐  │  SET PREDETERMINED  │
        │ DETERMINE END SURFACE    │S71│   NUMBER OF TIMES   │
        │        POSITION          │  └─────────────────────┘
        └──────────────────────────┘
                      │
                      ▼
                   ( END )
```

## INTERNATIONAL SEARCH REPORT

| International application No. |
|---|
| **PCT/JP2021/038338** |

**A.    CLASSIFICATION OF SUBJECT MATTER**

*B23H 7/02*(2006.01)i
FI:   B23H7/02 R

According to International Patent Classification (IPC) or to both national classification and IPC

**B.    FIELDS SEARCHED**

Minimum documentation searched (classification system followed by classification symbols)

B23H1/00-11/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 62-63017 A (MITSUBISHI ELECTRIC CORP.) 19 March 1987 (1987-03-19) publication, p. 2, upper left column, line 13 to p. 3, lower left column, line 16, fig. 1, 2 | 1-2, 5-7, 9-10, 13-15 |
| A | | 3-4, 8, 11-12 |
| Y | JP 9-136220 A (SODICK CO., LTD.) 27 May 1997 (1997-05-27) paragraphs [0022]-[0077], fig. 1-18 | 1-2, 5-7, 9-10, 13-15 |
| Y | JP 8-300225 A (SODICK CO., LTD.) 19 November 1996 (1996-11-19) paragraph [0012] | 2, 5-7, 10, 13-15 |
| Y | JP 4-81908 A (MITSUBISHI ELECTRIC CORP.) 16 March 1992 (1992-03-16) publication, p. 4, lower right column, lines 7, 8 | 2, 5-7, 10, 13-15 |
| A | JP 2017-19029 A (FANUC LTD.) 26 January 2017 (2017-01-26) paragraphs [0016]-[0038], fig. 1-16 | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

### INTERNATIONAL SEARCH REPORT
#### Information on patent family members

| International application No. |
|---|
| **PCT/JP2021/038338** |

| Patent document cited in search report | | | Publication date (day/month/year) | Patent family member(s) | Publication date (day/month/year) |
|---|---|---|---|---|---|
| JP | 62-63017 | A | 19 March 1987 | (Family: none) | |
| JP | 9-136220 | A | 27 May 1997 | US 5852269 A<br>description, column 4, line 66<br>to column 11, line 32, fig. 1-15<br>WO 1997/018052 A1<br>EP 803307 A1<br>CN 1168117 A | |
| JP | 8-300225 | A | 19 November 1996 | (Family: none) | |
| JP | 4-81908 | A | 16 March 1992 | US 5170026 A<br>description, column 4, line 50<br>EP 468451 A2 | |
| JP | 2017-19029 | A | 26 January 2017 | US 2017/0010085 A1<br>paragraphs [0035]-[0100], fig.<br>1-16<br>EP 3115140 A1<br>CN 106334845 A<br>KR 10-2017-0007149 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004314191 A